## Europäisches Patentamt
## European Patent Office
## Office européen des brevets

(19)

(11) Publication number: **0 180 200**
A2

(12) # EUROPEAN PATENT APPLICATION

(21) Application number: 85113756.2

(22) Date of filing: 29.10.85

(51) Int. Cl.⁴: **B 01 D  13/04,** B 01 J  20/18, B 01 J  29/00, B 01 J  31/26

---

(30) Priority: **30.10.84  JP 226769/84**

(43) Date of publication of application: **07.05.86** Bulletin 86/19

(84) Designated Contracting States: **DE FR GB IT NL**

(71) Applicant: **Suzuki, Hiroshi, No. 12-11, Nakayama, 3-Chome, Ichikawa Chiba, 272 (JP)**

(72) Inventor: **Suzuki, Hiroshi, No. 12-11, Nakayama, 3-Chome, Ichikawa Chiba, 272 (JP)**

(74) Representative: **Zumstein, Fritz jun., Dr., Dr. F. Zumstein sen. Dr. E. Assmann Dr. R. Koenigsberger Dipl.-Ing. F. Klingseisen Dr. F. Zumstein jun. Bräuhausstrasse 4, D-8000 München 2 (DE)**

(54) Composite having a zeolite, a layered compound or a crystalline-lattice material in the pores of a porous support and processed for production thereof.

(57) A composite having host-guest-intercalathe, molecular sieve and/or catalytic activity composed of a porous support of a selection from a metal, an inorganic material or a polymeric material and impregnated with a fine particle of a selection from a zeolite, a layered compound or a crystalline-lattice material in its pores of a porous support. The composite can be produced, for example, by the various processes described and claimed herein.

EP 0 180 200 A2

COMPOSITE HAVING A ZEOLITE, A LAYERED COMPOUND OR A CRYSTALLINE-LATTICE MATERIAL IN THE PORES OF A POROUS SUPPORT AND PROCESSES FOR PRODUCTION THEREOF

BACKGROUND OF THE INVENTION

1. Field of the Invention

This invention relates to the excellent resistance to light and chemicals, also high selective host a guest intercalathe, very active molecular sieve and/or catalytic that is said a functional and new material, epoch-making complex and these preparation method of.

The complex of this invention is applied for optoelectronics, quantumn electronics, quantumnoptics, optophysics, optocomputer, image-intensifier, oxygen enricher, ultra high speed image-processar, gas-separator, pure-water producer, hydrocarbon separator, catalytic reactor, class zero air filter, catalytic chiral synthesizer, normal paraffin separator, biomimetic reactor, ion-selective membrane molecular sieve membrane etal.

2. Description of the Prior Art

This inventor had already proposed the invention which relates to a composite membrane having molecular sieve activity and/or catalytic activity composed of a porous support of a metal, an inorganic material or a polymeric material and combined with its one surface, an ultrathin film of a cage-shaped zeolite composed of a 6-, 8-, 10- or 12- membered oxygen ring window having aluminum or gallium atoms, silicon or germanium atoms, and oxygen atoms as constituent members as JP58-135,155, US Ser. No. 633,979 and EPC 84108871.9

The composite membrane which was already proposed by this inventor and was cons tructed one surface and continuous layer upon a porous support by an ultrathin zeolite membrane was epoch-making. All conventional Loeb-Sourirajan type membrane and plasma-polymerized composite membrane upon a porous support has a nonporous active layer upon one side of a porous support layer, does transport by the principle of "dissolution-diffusion" and does work an ultra-filtration or a reverse-osmosis. It was a first time that the zeolite-composite membrane had introduced a porous and molecular sieve active layer upon a porous support or substrate. It was not only a separation by a same condition for water and aqua -solution, gases, hydrocarbon and its derivative, but also it was possible to separate with a catalytic reaction through a cavity. Conventional membrane materials, e.g. cellulose -acetate and polyvinylalcohol, have low resistance to high temperature and chemicals, but zeolite-composite-membrane is very stable to high-temperature and almost chemicals.

However, in the case of making a continuous and an ultra-thin membrane upon one surface of a porous support, it was difficult and expensive to-make an uniform and ultra-thin membrane. Also, in the case of selecting low-affinity substrate for zeolite, it was easy peeling, stripping off and difficult to use. It was impossible to make regularly at molecular level upon a porous support except zeolite. As inorganic and amorphous polymeric porous support, e.g.

VYCOR 7930 has only 25 % of open area in its one surface, a continuous and surface-ultra-thin membrane means 75% of no-use. In the case of cracking a heavy hydrocarbon, it is easy for an uniform and continuous catalytic surface to deposit and accumulate carbons. It's principally better and common that the projecting surface is catalyti-cally inert but the sunken and fallen surface is cataly-tically active. It is very precious and valuable that VYCOR 7930 has an antirefractive effect ( AR effect ) in its surface. A continuous and an uniform ultra-thin zeolite surface covers all AR effect-surface to erase its effect when to try its example of the previous·· proposal be traced. It's difficult to try its example of the previous. . proposal when material of porous support is attacked by reaction of forming thin-film.

According to the previous proposal of this inventor zeolite-composite-membrane had opened new generation of membrane technology which had resistance to high temperature and chemicals, and was superior to Loeb-Sourirajan membrane and NS-1 composite membrane. However modification of these membrane is required for big field of continuous and ultra-thin surface in the result of expantion of membrane application at molecular-shape-selectivity. The process for uniform and continuous ultra-thin membrane, is relative-ly expensive and difficult, has a big limitation for selecting of both membrane and support, and is producing

— 4 —

0180200

no-effectiveness to coat nonporous area.  It was impossi
-ble to use a molecular sieve performance of ultrathin
membrane upon porous support which is a layered compound,
e.g. montmorilonite, graphite, and is a lattice of a crystal.
It was expected to improve its versality that a portion
of a nonporous area is utilized for AR effect, a catalytic
inert area etal.

Changing the idea previously proposed an ultrathin
membrane adhering upon a porous support in the result of
surveying again problem of the described conventional
technology by this inventor, fine particles of a zeolite
are injected in the pores of a porous support, this techni
-cal idea is expanded to apply fine particles of a layered
compound and a crystalline-lattice material, and thereafter
this invention is established.

SUMMARY OF THE INVENTION

It is, therefore, an object of this invention to
provide a composite having host-guest-intercalathe,
molecular-sieve and/or catalytic activity composed of a
porous support of a selection from a metal, an inorganic
material or a polymeric material and impregnated with a
fine particle of a selection from a zeolite, a layered
compound or a crystalline-lattice material in its pores
of a porous support.

This invention also provides processes for produc
-ing the aforesaid composite.

0180200

## DETAILED DESCRIPTION OF PREFERRED EMBODIMENTS

The composite is having host-guest-intercalathe, molecular-sieve and/or catalytic activity, is composing a porous support of a selection from a metal, an inorganic material or a polymeric material, and is impregnated with a fine particle of a selection from a zeolite, a layered compound or a crystalline-lattice material in its pores of a porous support.

The term "zeolite", as used herein, denotes a syntherized zeolite e.g. A, X, Y, ZSM-5, a cage-like, three-dimensional metal oxide polymer such as silicalite, aluminophosphate, metasilicate, naturally hydrothermal zeolite etal.

It was already thirty-seven years past that Prof. Dr. R. M. Barrer had systematically started the research of synthetic zeolite, but there is several zeolite which could not be syntherized yet, especially it has a big window more than fourteen oxygen rings. The more they agree on the need for a catalyticdecomposition of heavy distillate oil, the more attention is filled to develop a big window of zeolite. Synthetic zeolite isn't only composited by conventional technology, but this invention is also opened to composite natural zeolite which could not be synthesized yet.

The term "a layered compound", as used herein, denotes a compound grown two-dimensional layer such as

graphite, fluorographite, β-alumina, β"-alumina, dicarcoge -nite of transition metal, fluoride of actinide group e.g. lantan, $K_2O$-$4TiO_2$ and its derivative, clay mineral, e.g. montmorilonite etal. A layered compound, e.g.montmorilonite fixed upon one surface of a porous support is unstable, nevertheless it was reinforced by the alumina column between layers. It is the first time that a layered compound is effective for industrial uses by fixation in the pores of this invention.

The term,"a crystalline-lattice material"as used herein, denotes a three-dimensional tubular space compound and a compound having space or void interpacked particles in difference with a three-dimensional cage-like compound such as a zeolite. It is illustrated for example to an oxide such as Fe, Cu, Ag, V, Cr, Mo, W, Mn, Co, Ni, Zn, Cd etal., a silver salt such as α-AgI, silicate, phosphate, a group of $CaF_2$ type crystals, a group of $WO_2$ bronze, silic oxide of crystovalite, a metal hydride, a single crystal, a sintered material. On the other word, tubular compound relates an aisle looking like a well, and packed compound relates a gap of impregnated balls.

A crystalline-lattice material fixed upon one surface of a porous support is unstable, nonuniform and mottled for applications of host-guest-intercalathe, molecular-sieve and/or catalytic activity. This invention has disslved this trouble and opened for an industrial application.

The term "host-guest-intercalathe" as used herein, denotes that a host having designed cavity identifies and draws a guest having adaptability up to a host, and thereafter a molecular complex is established. It is important for the complex of host and guest to work both a structural factor and cooperation. The former is size, shape and steric configuration of cavity, kind, number and arrangement of aggregating-site. The latter is ionic configuration, ion-dipolar, coordination of $\pi$-electron, coordinated bond, interaction of charge-transfer, hydrogen bond, hydrophobic bond, von der Waals power etal. This complex is based upon the principle of a host having artificial design and synthesis, and a guest discriminating a key-hole of a host. Using this complex material having functions of host-guest-intercalathe by this invention, it. is possible to make a versatile function material having separation, transportation, sensor, analysis etal., to produce a high-selective and an excellently effective catalyst taking a synthetic and a biological function, and to supply a pollution-free processes having a save-resource and a save-energy. Generally speaking a molecular sieve and/or catalytic reaction, a material transports through the pore made in the cavity of a porous support, but it often be used to fix a host in a guest-cavity taking no-matter through its guest cavity.

A metalic porous support of this invention relates SUS 316, titaneous sintered plate, SUS 316 stainless knitted wires treated oxygen-free heating, alloy which is consisted from a metal having resistance to a chemical and a metal having no-resistance to a chemical, and is dissolved off a metal having no-resistance to a chemical by a chemical, e.g. Raney-Ni.,etal.

An inorganic porous support relates a sintered matter of $\alpha$-alumina, silicon carbide, etal., VYCOR 7930 porous glass, PPG porous glass, $CeO_2-3Nb_2O_3$ porous glass, $SiO_2-P_2O_5$ porous glass, $SiO_2-GeO_2$ porous glass, silas porous glass, non-alkali type porous glass, a porous glass containing a heavy metal oxide, mulite porous crystal glass, high-silica foam glass, a sintered clay, unglassed pottery etal.

An organic polymeric porous support relates, cellulose-acetate, polysulfone, modified acrylonitrile, PVC, polyvinylalcohol, polytetrafluoroethylene having trade name FLOROPORE, nucleopore of polycarbonate, a sintered porous plate of ultra-high-molecular-weight polyethylene, etal.

A method of packing a fine particle of a zeolite, a layered compound, a crystalline-lattice material or these precourcor into a porous support relates pressure, absorption, ultra-sonic treatment, a combination of there -of, etal., however in the case of a localized packing of these fine particle at one surface and its neighbor, pressure, absorption or a combination of thereof is preferred.

The shape of porous support illustrates a thin plate, a tube, a hollow fiber, a convex or concave plate, wave-plate, a plate having changing profile or a free-designed matter.

The porous support of a spinodal separated glass, e.g. VYCOR 7930 or organic polymeric ultrafiltration membrane generally has an uniform pores of diameter, but the porous support of a ceramics, an unglassed pottery, a sintered metal, a porous alloy dissolving out a metal having low resistance to a chemical, etal., has a coarse and a disproportionate pores of diameter. A porous support having an uniform pore-size is packed by a kind of an uniform particle solution from a zeolite, a layered compound, a crystalline-lattice material or these precursor, but a porous support having a disproportionate pore-size and distribution has to be packed by another method. Packing a porous support of a disproportionate pore-size and distribution, it is prepared to make many kind of classified particles by a lot of micropore membrane or ultrafiltration membrane, for example, filtrate permeated through membrane having 2000Å diameter of pore is treated by membrane having pores of 1000Å diameter. Filtrate of previous stage is penetrated in turn to 500Å, 200Å, and

100Å as mentioned above, and thereafter many kinds of filtrate are arranged.  These filtrates are impregnated to porous support by means of pressure, absorption, ultra-sonic trearment(sonicate) or a combination of thereof from filtrate containing bigger particles in turn.

This invention illustrated precursor of a zeolite, a layered compound or a crystalline-lattice material as follows;

kaolin mineral, allophene, volcanic glass, montmorilonite, atapaljate, bauxite clay, diaspore clay, agalmatolite, and these amorophous clay minerals, silicate of silica-gel, sodium metasilicate, amorophous silica solid powder, silicic sand, and so on. alumina source of aluminum hydroxide, sodium aluminate and so forth.  phosphate, germanium salt gallium salt etal.

If these precursor is wanted to change a zeolite, a layered compound or a crystalline-lattice material in situ, an adequate processes is selected from the follows; a hydrothermal treating, a flux method with melting-freezing, a sintering, an aquous solution heating and drying method etal.

It is usually supplied that a zeolite, a layered compound or a crystalline-lattice material is fixed in the pores of a porous support without delay, but further chemical treating is better for stability-up.

Pyrophylite such as montmorilonite, haloisite, is a kind of a layered compound, and could be used partially converted to a zeolite by hydrothermal treatng and partially remains to a layered compound after impregnated in the pores of a porous support.

Also by this invention, a packing process and a chemical treating could be simultaneously performed to a zeolite, a layered compound, a crystalline-lattice material and these precursors in the pores of a porous support. A fine particle, e.g. kaolin, monmorilonite, or zeolite Y (change to A) could be hydrothermally treated during impregnating these particles in the pores of a porous support.

The application of a host-guest-intercalation is typically illustrated as follows; This effect could not be attained by the effort of particle zeolite, particle layered compound and crystalline-lattice material.

-ZSM-5 zeolite in the pores neighboring one surface of VYCOR 7930 porous glass is packed by iron carbonyl and is changed to a reddish membrane by $200\,^{\circ}C$ treating. This process is converted iron carbonyl to iron oxide. This is powerfull for an UV optic device. Also manganese carbonyl, chromium carbonyl, molybdenum carbonyl, cobalt carbonyl etal could be changed to a new pattern for effective opto-electric devices.

-Particles of zeolite A are sucked in the pores of VYCOR 7930 and are partially treated by hydrothermalization. Thereafter sodium ion is exchanged to silver-ion. This VYCOR 7930 is treated such high as melting zeolite A till thirty minutes and then a new material, silver-aluminosilicate crystal in VYCOR 7930 glass is created. This new material plays beta-type at low temperature and plays aipha-type at high temperature, and is effective for a solid ion conductor.

-Particles of ZSM-5 zeolite are packed in the cavity of FLOROPORE(TM) FP 100 film made of TEFLON(TM), and then could be partially hydrothermalized for more stabilization. A styrylpiridinum-cyanine pigment and a melocyanine pigment which are centrosymmetrical in the state of crystal are impregnated in the cavity of ZSM-5 zeolite. Surprising this composite is appearing a big SHG(Secondary Harmonic Generation)effect, and then this is effective for a nonlinear optic device and optoelectronic material.

-An alloy particle of titan and nickel which is powdered in C-12 normal-paraffin, is impregnated in the pores of a sintered SiC and be heated for the purpose of a stabilization. This composite membrane could absob hydrogen at 150°C. A trace of heavy hydrogen could be condensed by this device.

-Tungsten bronze($WO_3$)which be powdered in C-12 normal paraffin, is impregnated in the pores of a sintered $\alpha$-alumina and is stabilized. This device is trapped litium ion as a guest and thereafter covers both sides by a conductive glass(e.g. nesa glass) to stabilize and to make a blue display element(ECD element).

-SUS 316 sintered plate is dipped in an aquous solution of calcium sulfate and zirconium sulfate(mol. ratio= Ca:Zr=2:8) and it treated an ultra-sonic process(to sonicate)in this solution.  Thereafter this plate is neutralized in an ammmonium solution and is formed a stabilized zirconia in the cavity of the plate by a treatment of a crystalization process for 500°C, 30 minutes This device is effective for an oxygen sensor as an oxygen-ion conductor.

-SiC sintered plate is dipped in an alcoholic solution of(mol. ratio Rb:Ag=1:4) RbI and AgI , and thereafter is stabilized to $RbAg_4I_5$ of β-Mn type crystalline for dissolving at 650°C in the pores of this plate.  This plate sandwiched between a silver cathode and $RbI_3$ anode activated by tetrabutyl ammonium iodide is a solid electric cell which has open voltage:o.56 V and shorted current density: 150 $mA/cm^2$.

-α-alumina is dipped in zinc chloride saturated solution and thereafter is sintered at 350°C. Lithium-ion is trapped in the pores of Wulz mineral type crystal. This composite is effective for temperature-senser.

-The pores of VYCOR 7930 porous glass are impregnated by the fine powders of magnesium montmorilonite.  Monomer of acrylonitrile is trapped in magnesium montmorilonite, is vacuumed and is radiated /polymerized by gamma ray. Product-ladder-polymer is reformed to a graphite by baking, is trapped potassium and sodium ion to EDA complex( electron=doner=acceptor complex), and is made for an effective catalyst.  Therefore the surface of this catalyst made of arranging the coordinate donor=acceptor molecularly and regularly, has an unique and an abnormal activity, e.g. ammonium synthesis passing through pattasium layered compound by nitrogen and hydrogen (molar ratio=1:3) at 300°C, and Fisher-Tropsh synthesis permeating sodium layered compound absorbed carbon mono -oxide by hydrogen.

Typical examples of this composite by the invention illustrates molecular sieve activity which could not be performed by conventional particle zeolite as follows; -Zeolite NaA thin-membrane in the pores of neighbored outer surface of α-alumina porous tube is ion-exchanged to CaA type.  Naphtha distillate is pressurized outer side of this α-alumina tube.  Permeate is n-paraffin and n-olefin.  Remains are high octane number gasoline. Also permeate is valuable for feed stock of petrochemical. Therefore this process has double effect.  This membrane tube is effective for kerosene and diesel distillate. In this case feed stock of synthetic surfactant(LAB) and low pour point diesel distillate are easy to produce from this process. Treatment of lube base stock is possible for this membrane tube.

-Zeolite NaA thin membrane in the pores of neighbored outersurface of porous silica hollow fibers following USP 3,843,341(1974) is ion-exchanged to zeolite CaA. C-4 hydrocarbons fraction is pressurized to outer surface of this hollow fibers. Butene-1 is selectively penetrated. Non-aromatic hydrocarbons are solely passed through in the case of platformate-distillate-feed.

-Zeolite NaA thin membrane in the pores of neighbored one surface of FLOROPORE(TM) FP 100 film(made by Sumitomo Elecrtic Co., Ltd.) is ion-exchanged to zeolite CsA type. This membrane is effective for separation and storage of radio-active isotopes, separation of sulphur compounds etal.

-Zeolite 13X membrane in the pores of VYCOR 7930 porous glass support is effective for continuous separator of hydrogen sulphide, mercaptans and carbon dioxide from LPG(liquified petroleum gas) and oxygen rich gas separator from air.

-Silicalite in the pores of porous glass support containing zirconia is performed for water purification from sea water, and ultra-pure water of reverse-osmosis having very stability to hydrocarbons.

-Zeolite ZSM-5 thin membrane in the pores of neighbored one surface of titaneous sintered porous plate is tested by selective para-xylene permeation from meta- and para- isomers mixtures

When this composite membrane of the invention is used for sole molecular-sieve as mentioned above, the thin layer of crystallized gel can be used without the treatment of ion-exchange. It is possible to change pore-size of molecular-sieve by the difference of ionic radii with ion-exchange.

Typical example is illustrated for the purpose of catalytic activity of this invention as follows; It's necessary to exchange alkaline metal etal ion of crysta. -llized gel for effective ion. Example in the case of typical zeolite NaX and NaY are illustrated as follo ws; $(AlO_4)^-$ structures in zeolite are certainly present Na ions and it is necessary to ion-exchange this Na ions according as Na ions lessen catalytic activity. Treating method of ion-exchanging and performance of ion-exchanged zeolite are the same method and performance as particle zeolite, and are omitted its explanation as well-known technology. Also lsyered compounds and crystalline-lattice materials are the same as types of those particles. Some examples for the purpose of catalytic activity of this invention are illustrated as follows;
-Zeolite RbY thin-membrane in the pores of α-alimina sintered poroud support is penetrated methanol and toluene as feeds, and thereafter is recovered styrene-monomer and ethylbenzene as products of permeate.

-Zeolite CsY thin-membrane in the pores of SiC sintered porous support is permeated by formaldehyde and toluene and gotten styrene-monomer as the result of formyldehydra-tion.

-Zeolite Pd-CuY in the pores of VYCOR 7930 porous glass is passed through propylene and steam at about 120°C and is permeated acetone highly selective as permeate of hydration.

-Zeolite RhY in the pores of VYCOR 7930 porous glass is penetrated by ethylene and is recovered as product of dimerization.

-Zeolite HY in the pores of VYCOR 7930 porous glass is permeated hexene-1 and is took benzene as permeate of cyclization.

-Tangusten bronze thin-membrane in the pores of VYCOR 7930 porous glass is impregnated propylene and is permeated ethylene and butene-2 in the result of disproponation. $ReO_3$, $AlF_3$, $MoF_3$, $TaF_3$, $ScF_3$, $In(OH)F_2$, $TaO_2F$, $TiOF_2$, $MoOF_2$, $NbO_2F$ etal. having bronze structure are effective for these catalytic activity same as W bronze.

-Following Nature, Vol. 271(9Fel. 1978) 512-516, the fine particle of Silicalite is catalytically synthesized by tetraethylammmonium bromide. This fine particle is pressurized in the pores of VYCOR 7930 porous glass, and is hydrothermally grown by the condition of additive tetra-ethylammonium bromide, pH=12.85, 100°C and 4 hrs.

The following is ion-exchanged to a chiral phosphine and rhodium chloride. Methylphenylketone is transformed through this composite membrane and chiral hydrogenation is performed by 83% yield of S type.

The performance and versatile function of this invention relates molecular sieve and catalytic activity respectively as mentioned above. Furthermore both molecular sieve and catalytic activity is characterized this invention as follows;

-Zeolite Pt-CaA cage-membrane in the pores of VYCOR 7930 porous glass is transformed hydrogen, propylene and iso buthylene, and thereafter permeate is hydrogen and · propane. This relates molecular sieve and selective hydrogenation os propylene. The same membrane is pressurized hydrogen and mixtures of trans butene-2 and cis butene-2 and permeate is trans type having hydrogenation. This is also relates molecular sieve and catalytic activity of trans type.

-Cage zeolite thin membrane of Pt-Y type or Pd-Y type is pressurized cyclohexene and penetrated benzene by the result of catalytic dehydrogenation.

-Zeolite thin membrane ion-exchanged to rare earth ion or transition metal ion in the pores of VYCOR 7930 porous glass is pressurized heavy distillate hydrocarbon with hydrogen and permeated light hydrocarbon catalytically cracked by the separation of molecular sieve. Besides this composite membrane is stable to nitrogen, sulphur and these derivatives in feed heavy distillate hydrocarbon and is permanently catalytic activity against these poisonings.

-Zeolite NaA in the pores of α-alumina sintered plate is ion-exchanged to Ca ion and Pt ion or Pd ion, is pressurized by Minus kerosene and diesel distillate hydrocarbons, and permeates normal paraffin of low molecular weight in the result of hydrocracking.

-Zeolite HZSM-5 thin membrane in the pores of α-alumina sintered plate has selective molecular sieve and catalytic activity for aromatic hydrocarbons. Xylene isomers, for example, by this composite membrane is selectively permeated para-xylene>ethylbenzene>ortho-xylene>meta-xylene as permeates. Moreover this composite membrane works catalytic isomerization of ethylbenzene, ortho-xylene and meta-xylene to para-xylene.

-Zeolite HZSM-5 thin membrane in the pores of α-alumina sintered plate is ion-exchanged and is permeated toluene and methanol to Co-P-ZSM-5 at 400°C. Catalytic methylation happens with molecular sieve to penetrate para-xylene selectively.

-Montmorilonite dopped with $SbF_5$ in the pores of SiC sintered plate works catalytic decomposing alkylation and molecular sieve activity from permeation of diisobuthylene and phenol to para-tertiary-buthyl-phenol selectively.

0180200

The examples set forth herein above will serve to illustrate the typical examples and applications of the invention without limiting the same.

The following Examples illustrate the processes for producing the composite of the invention and the use of these membranes to achieve a host-guest-intercalation, a molecular sieve and/or a catalytic action. It should be understood that the invention is in no way limited to these specific examples.

Example 1

Alkaline solution of ZSM-5 zeolitic ultrafine particles according to Applied Catalysis, 5, (1983) 109-117, is permeated by an ultrafiltration membrane of UK-200(TM), 43 mm diameters, supplied by Tomoegawa Papermill Co., Ltd. This solution containing less than 75 $\overset{o}{A}$ diameters particles of zeolite ZSM-5 is permeated to VYCOR 7930 porous glass (1 mm thickness) fixed in UHP-43 ultrafiltrator supplied by Toyo Filterpaper Co., Ltd. till 5 hrs and 5 Kg/cm$^2$ nitrogen gauge pressure. Add tetra n-propyl ammonium bromide (TPA bromide) 2.50g, grains of caustic soda 0.30g and sodium aluminate (NaAlO$_2$) 0.10g with distillate water 160 ml in polypropylene reaction vessel (NALGENE 2118-0008) modified cover equipped tap-water cooler and thereafter is dipped in silicon oil bath at 100°C and hydrothermed 6 hrs with electric agitation. The VYCOR 7930 is washed enoughly after hydrothermalization. Shaved sample from one surface of VYCOR 7930 which is soaked ZSM-5 zeolite particles and is shaved off by knife is cinfirmed its crystalinity by X-ray powder difraction. This impregnated and same lot VYCOR 7930 is built in a reverse osmosis reactor made of Tama Seiki Co., Ltd. C-9 hydrocarbon fraction of platformate containing pseudocumene mainly is fed to this system. Less than 2 wt% aromatics and the other of non-aromatics are detected by gaschromatography.

Example 2

Alkaline solution of zeolite A ultrafine particles is synthesized according to J. of Colloid and Inter Sciense Vol.28, No.2, pp315(Oct. 1968). Permeate of less than 75 $\overset{\circ}{A}$ diameters zeolite is brought by ultrafiltrayion membrane UK-200(Tomoegawa Papermill Co., Ltd.) in the pores for impregnating to VYCOR 7930 porous glass. This solution is adjusted to pH=12.85 by mol ratio $Na_2O/Al_2O_3$=8.50 of alkali and alumina. VYCOR 7930 porous glass plate of 50 mm diameter is set in reverse-osmosis reactor made of Tama Seiki Co., Ltd., and is simultaneously packed and hydrothermalized at 100°C, 10 $Kg/cm^2$ nitrogen gauge pressure by fine particle mentioned above. The impregnated VYCOR 7930 after washed enoughly, is set in NALGENE polypropylene 2118-0008 vessel modified cover equipped water condencer, and ion-exchanged by 2N-KCl 160 ml solution with electric agitation, 100°C and one week. Normal-butane containing 5 wt% isobutane is permeated this composite membrane at

50 Kg/cm$^2$ set in a batch-wise reverse-osmosis reactor made of Tama Seiki Co., Ltd. heating 50°C in silicon oil bath, and permeate is mainly n-butane containing less 0.1 wt% isobutane by gaschromatography.

Example 3

0.05 % aqua solution of each hydrogen type Montmori-lonite, Ti type Montmorilonite, Na type fluorinated tetra silicated mica, and Ti type fluorinated tetrasilicated mica is ultra-sonicated and ultrafiltrated by UK-200 ultrafiltration membrane made of Tomoegawa Papermill Co., Ltd. This solution of four kinds is impregnated to SiC sintered porous plate by 10 Kg/cm$^2$ pressure, 10 hrs reaction time. Helium gas is permeated and stabilized them at 350 °C one day and night. Thereafter methanol to gasoline( MTG) reaction is demonstrated for 100 hrs. Average data of 100 hrs.: methanol 88.3% conversion of H-Montmorilonite, 12.5% conversion of hydrocarbon yield, methanol 95.8% conversion of Ti-Montmorilonite, 71.2% hydrocarbon yield, methanol 5.8% conversion of Na-fluorinated tetra silicated mica, 3.9% hydrocarbon yield, methanol 72.4% conversion of Ti-fluorinated tetrasilicated mica, 22.6% hydrocarbon yield. All data isn't changed for 100 hrs.

Example 4

Silicalite 10g bought from market is sonicated in distilled water 160 ml after mechanical agitation. This solution is ultrafiltrated by FP022 ultrafiltration

membrane supplied by Sumitomo Electric Co., Ltd. This filtrate is permeated by Fluoropore FP02 at 10 $Kg/cm^2$. Sodium metasilicate 1g, tetra n-propyl ammonium bromide 10g is dissolved and agitated in distilate water 160ml. Thereafter this solution is adjusted to pH=12.85 by caustic soda. This pH adjusted solution, Fluoropore 010 and agitator stirrer are settled in polypropylene vessel NALGENE 2118-0008 equipped water cooler. And then this is hydrothermalized by 4 hrs. 100°C with agitation. Shaved one surface of this membrane is checked by X-ray powder difraction FT-IR and transmitted electron micro -scope. The composite is determined to ten oxygen window Silicalite. Obstruction per cent of 0.109 micron diameter latex polystyrene made of Dow Chemical is 100% retention by different sample of same lot. According to Federal Spec. 209B retention of DOP particles is 100%. This composite Silicalite is attained Class Zero class.

Example 5

Silicalite fine particle is made according to Nature, Vol. 271, No. 9 pp512-516(Feb. 1978). This solution is permeated to Nucleopore Membrane (pore diameter 100micron manufactured by Nomura Sciense Co., Ltd.) and then is separated to permeate and remains. This permeate is separated to permeate and remains by Nucleopore (pore dia 1.0 micron), and thereafter in turn separated by 0.1 micron diameter, 0.015 micron diameter and UK-200 ultrafiltration

0180200

membrane (75Å porediameter made by Tomoegawa Papermill Co., Ltd.). SUS 316 sintered plate, 47mm diameter X 3mm thickness, pore diameter 10 micron meter, is full-impreg -nated by permeate prepared each membranes; 5.0 micron 1.0 micron, 0.015 micron and 75 Å pore diameter in turn following to remains of 10 micron pore diameter by pressure 5 $Kg/cm^2$, 5 hrs, This plate is dipped in adjusted pH= 12.85 solution containing tetra n-propyl ammonium bromide 10g and grains of caustic soda 0.30g in 160 ml distilate water and is hydrothermalized 100°C, 4 hrs. After reaction water washing enough and check by X-ray powder difraction and transmitted electric microscope. Silicalite is confirmed and tested a permeation of 0.1 wt% sucrose solution by different example of same lot. Retention of sucrose is 99.9% at 15 $Kg/cm^2$ nitrogen pressure by a batch reverse-osmosis reactor made by Tama Seiki Co., Ltd.

Example 6

2 wt% solution of patassium carbonate and titaneous oxide (mol ratio=1:3.5) is prepared with rigorous agitation. Fine particle is gotten following to spray this solution in about 1000°C electric furnace. This particle is dissolved to 2 wt% solution with distillate water and is sonicated. This new solution is permeated to ultrafiltration membrane UK-200 (manufactured by Tomoegawa Papermill Co., Ltd.) and is recovered permeate. This permeate is impregnated to $P_2O_3$-$SiO_2$ typeporous glass prepared by teaching of USP 3,600,147, 50mm diameter X 4.5 mm thickness under 10 Kg/cm$^2$G pressure. The impregnated porous glass is composed of titaneum oxide as a host and K$_2$O as a guest, and is effective for great reduction catalyst. This host-guest-intercalathe is, for example, hydrothermalized and ion-exchanged by 2N barium hydroxide from a guest as potassium to a guest as barium.

Example 7

A composite VYCOR 7930 of the same lot was prepared as in Example 1, but using ammonium sulfate 30g solution with 160 ml distillate water in polypropylene reaction vessel for 100°C 5 hrs agitating. A composite is washed enough and thereafter is treated the same ammonium sulfate solution with the same condition. A composite is washed untill free of sulfate ion and thereafter treated 550°C 3 hrs in electric furnace. This composite is penetrated toluene at 400°C 500 psig in reverse-osmosis reactor made of Tama Seiki Co., Ltd. Average permeate of 24 hrs are gaschromatically as follows:

| benzene | 12.7 wt% |
| toluene | 45.3 wt% |
| para-xylene | 18.5 wt% |
| others | 23.5 wt% |

It's clear by this result that this HZSM-5 composite has both molecular sieve and catalytic activity.

Example 8

2 wt% chloroform solution of parahydroxystyryl N-methylpiridine, catalog No. NK 855 of Nippon Kanko Shikiso Kenkyusho, is prepared and thereafter is soaked a composite prepared as Example 7 but 12 hrs with agitation under atmosphere. in same reverse-osmosis reactor. Following this process it is pressured 20 $Kg/cm^2G$ nitrogen 12hrs. HZSM-5 as a host and NK 855 as a guest are combined by these operations. Secondary harmonic Generation(SHG) effect of this intercalathe is better 250 than those organic standard od urea. This composite=intercalation is a combination from HZSM-5 zeolite as a host and NK 855 as a guest which has both demerit of controsymmetry and merit of high β value. This is an exiting new material which has high second harmonic and opto-nonlinear using the Nd:TAG output.

β=linear polarizability

WHAT IS CLAIMED IS:

1.   A composite having host-guest-intercalathe, molecular sieve and/or catalytic activity composed of a porous support of a selection from a metal, an inorganic material or a polymeric material and impregnated with a fine particle of a selection from a zeolite, a layered compound or a crystalline-lattice material in its pores of a porous support.

2.   A process for producing the composite of claim 1, which comprises

(a)  impregnating a fine particle of a selection from a zeolite, a layered compound, a crystalline-lattice material or these precursor in the pores of a selected porous support from a metal, an inorganic material or a polymeric material

(b)  when the precursor is selected for a fine particle, it has to render converting to a zeolite, a layered compound or a crystalline-lattice material.